# FASCICULE DE BREVET EUROPEEN

(11) **EP 0 722 881 B1**
(45) Date de publication et mention de la délivrance du brevet: **24.11.1999**
(21) Numéro de dépôt: 96400123.4
(22) Date de dépôt: 18.01.1996
(51) Int. Cl.: B62J 15/00, B62J 6/18

(54) **Garde-boue à âme métallique coextrudée pour bicyclette et procédé de réalisation associé**
Koextrudiertes Schutzblech mit metallischem Kern für Fahrrad und zugehöriges Herstellungsverfahren
Coextruded mudguard wit mettallic core for bicycle and associated method of production

(30) Priorité: 19.01.1995 FR 9500579
(43) Date de publication de la demande: 24.07.1996
(73) Titulaire: CANYON, 77250 Villemer (FR)
(72) Inventeur: Cagnion, Laurent, F-77250 Villemer (FR)
(74) Mandataire: Pontet, Bernard

(56) Documents cités:
- EP-A- 0 166 929
- DE-U- 9 200 241
- FR-A- 1 135 667
- NL-A- 6 800 336

## Description

La présente invention concerne un garde-boue à âme métallique coextrudée pour bicyclette et un procédé de réalisation associé.

Des impératifs évidents de sécurité routière ont depuis longtemps incité les fabricants de bicyclette à concevoir des garde-boue intégrant, outre leur fonction initiale, des fonctions de liaison électrique et de support de dispositifs d'éclairage. Par ailleurs, des techniques nouvelles de fabrication de garde-boue sont apparues pour répondre à des exigences de légèreté et de solidité et à des contraintes toujours plus fortes sur les coûts de fabrication. Il en est ainsi des garde-boue du type à âme métallique coextrudée avec un revêtement plastique.

On connaît des garde-boue pour bicyclette, du type à âme métallique coextrudée avec un revêtement plastique dans lesquelles c'est l'âme métallique du garde-boue elle-même qui sert de conducteur, le retour de courant se faisant par les tringles de fixation du garde-boue.

Le document NL-A-6 800 336 divulgue un garde-boue pour bicyclette, comprenant plusieurs âmes métalliques coextrudées avec un revêtement plastique et un dispositif d'éclairage relié à ce garde-boue par des pièces de connexion mécanique et électrique. Ce garde-boue comprend en outre un conducteur d'alimentation coextrudé avec les âmes métalliques et avec le revêtement plastique.

On constate généralement certains problèmes de détérioration, à la longue, des contacts que nécessite l'alimentation par l'âme du garde-boue coextrudée. Ces contacts sont assurés par des prises-pressions qui perdent à la longue leur conductivité.

Le but de l'invention est de remédier à ces inconvénients en proposant un garde-boue du type à âme métallique coextrudée qui présente, en matière d'alimentation électrique du dispositif d'éclairage, une fiabilité accrue par rapport à celle observée avec les garde-boue actuels, tout en étant réalisable de manière simple.

Suivant l'invention, le garde-boue pour bicyclette, comprenant au moins une âme métallique coextrudée avec un revêtement plastique, au moins un dispositif d'éclairage relié à ce garde-boue par des moyens de connexion mécanique et électrique, et des moyens pour alimenter ce dispositif d'éclairage, comprenant en outre, au titre des moyens d'alimentation, au moins un conducteur d'alimentation coextrudé avec l'une des âmes métalliques et avec le revêtement plastique, et les moyens de connexion mécanique et électrique étant agencés pour relier électriquement ce conducteur d'alimentation à au moins un pôle du dispositif d'éclairage, est caractérisé en ce que le conducteur d'alimentation est placé en contact contre une face de l'une des âmes métalliques coextrudées.

Ainsi, avec un garde-boue selon l'invention, la fiabilité de l'éclairage est considérablement accrue par rapport à celle des garde-boue actuels puisque le conducteur d'alimentation est définitivement noyé dans la matière au stade de la coextrusion.

Dans un garde-boue selon l'invention dans lequel les moyens de connexion mécanique et électrique comprennent une première pièce de connexion conductrice électrique s'étendant à l'extérieur dudit garde-boue et une seconde pièce de connexion conductrice électrique s'appuyant contre la face intérieure dudit garde-boue et reliée mécaniquement à ladite première pièce de connexion à travers un trou ménagé dans ledit garde-boue, ce trou est disposé de façon à interrompre le conducteur d'alimentation et est pourvu, sur l'une des faces dudit garde-boue, d'un lamage de forme et d'épaisseur déterminées de sorte que le conducteur d'alimentation coextrudé est accessible au fond de ce lamage. De plus, la pièce de connexion correspondant à la face comportant ledit lamage est maintenue par les moyens de connexion électrique et mécanique en contact électrique permanent avec au moins une partie accessible dudit conducteur d'alimentation.

Dans un premier exemple de réalisation d'un garde-boue selon l'invention, le conducteur d'alimentation est disposé au niveau de la face intérieure dudit garde-boue, le lamage est réalisé sur la face intérieure dudit garde-boue, et la seconde pièce de connexion maintient sur le fond dudit lamage un contact électrique avec la portion accessible du conducteur d'alimentation.

Dans un second exemple de réalisation d'un garde-boue selon l'invention, le conducteur d'alimentation est disposé au niveau de la face extérieure dudit garde-boue, le lamage est réalisé sur la face extérieure dudit garde-boue et la première pièce de connexion maintient sur le fond dudit lamage un contact électrique avec la portion accessible du conducteur d'alimentation.

La première pièce de connexion peut avantageusement comprendre une partie mâle d'un bouton-pression. Cette partie mâle peut comporter en outre une partie cylindrique filetée introduite dans le trou et la seconde pièce de connexion comprend alors un écrou et une rondelle de blocage.

Mais les moyens de connexion mécanique et électrique peuvent être avantageusement réalisés sous la forme d'un bouton-pression riveté d'un type semblable à celui utilisé dans l'industrie textile.

Dans un troisième exemple de réalisation d'un garde-boue selon l'invention, chaque trou est disposé de façon à interrompre le conducteur d'alimentation qui présente alors deux extrémités de conducteur affleurant la paroi intérieure dudit trou, et la première pièce de connexion et la seconde pièce de connexion coopèrent pour écraser le conducteur d'alimentation de sorte que les extrémités de conducteur viennent en contact électrique permanent avec celle desdites première ou seconde pièces de connexion qui occupe ledit trou en regard du conducteur d'alimentation. Cet exemple de réalisation n'implique pas la réalisation de lamages à la surface des trous.

Dans un quatrième exemple de réalisation d'un garde-boue selon l'invention, dans lequel on utilise, pour chaque trou, une pièce de connexion conductrice unique comprenant une partie supérieure s'appuyant contre la face extérieure du garde-boue et une partie inférieure comportant des pattes de sertissage, chaque trou est réalisé à proximité du conducteur d'alimentation et est pourvu, sur la face intérieure du garde-boue, d'un lamage de forme et d'épaisseur déterminées pour rendre accessible le conducteur d'alimentation et pour recevoir les pattes après sertissage, de sorte que le conducteur d'alimentation se trouve en contact électrique permanent avec l'une au moins desdites pattes serties.

Plusieurs modes d'alimentation d'un dispositif d'éclairage équipant un garde-boue selon l'invention peuvent être envisagés. Ainsi, dans un premier mode d'alimentation, le garde-boue selon l'invention comprend un conducteur d'alimentation associé à une âme métallique, pour relier un premier pôle d'un générateur de tension à un pôle d'au moins un dispositif d'éclairage dont l'autre pôle est relié au second pôle dudit générateur de tension via des pièces de fixation conductrices.

Dans un second mode d'alimentation, le garde-boue selon l'invention comprend au moins un premier et un second conducteurs d'alimentation associés respectivement aux première et seconde âmes métalliques, pour relier respectivement un premier et un second pôles d'un générateur de tension au premier et au second pôles d'au moins un dispositif d'éclairage.

Dans un troisième mode d'alimentation, le garde-boue selon l'invention comprend au moins un premier, un second et un troisième conducteurs d'alimentation associés respectivement aux première, seconde et troisième âmes métalliques, deux desdits conducteurs d'alimentation étant prévus pour relier un premier pôle d'un générateur de tension à un premier pôle d'au moins un dispositif d'éclairage et le troisième conducteur étant prévu pour relier le second pôle dudit générateur de tension au second pôle du dispositif d'éclairage.

Selon un autre aspect de l'invention, il est proposé un procédé pour réaliser un garde-boue selon l'invention, comprenant une étape pour coextruder au moins une âme métallique avec un revêtement plastique suivant une conformation prédéterminée, et au moins une étape pour implanter des moyens pour connecter mécaniquement et électriquement au moins un dispositif d'éclairage à ce garde-boue, cette étape d'implantation comprenant au moins une étape pour percer un trou dans ce garde-boue, une étape pour disposer dans ce trou des moyens de connexion mécanique et électrique comprenant une première pièce de connexion s'étendant sur la face extérieure du garde-boue et une seconde pièce de connexion située sur la face intérieure dudit garde-boue, caractérisé en ce que l'étape de coextrusion comprend en outre une coextrusion d'au moins un conducteur d'alimentation avec l'âme métallique et le revêtement plastique de sorte que ce conducteur d'alimentation se trouve noyé dans ledit revêtement plastique à proximité de l'une des faces dudit garde-boue, en ce que l'étape d'implantation comprend en outre, pour chaque trou :
- une étape pour réaliser un lamage de ce trou sur ladite face, la profondeur et le diamètre de ce lamage étant déterminés de sorte qu'au moins une portion de ce conducteur d'alimentation devienne accessible au fond dudit lamage ; et
- une étape pour réaliser un contact électrique permanent entre cette portion accessible et la pièce des moyens de connexion mécanique et électrique qui correspond à la face comportant ledit lamage.

Il est également proposé un procédé pour la réalisation d'un garde-boue selon l'invention correspondant au troisième exemple de réalisation précité, dans lequel chaque trou est percé de façon à interrompre le conducteur d'alimentation coextrudé et l'étape d'implantation comprend en outre, pour chaque trou, un écrasement, par l'une des pièces de connexion, des extrémités du conducteur d'alimentation qui affleurent ledit trou, de sorte que ces extrémités de conducteur viennent en contact permanent avec celle desdites première ou seconde pièces de connexion qui occupe ledit trou en regard desdites extrémités de conducteur.

Selon encore un autre aspect de l'invention, il est proposé un procédé de réalisation correspondant au quatrième exemple de réalisation précité, comprenant au moins une étape pour implanter une pièce unique pour connecter mécaniquement et électriquement au moins un dispositif d'éclairage à ce garde-boue, cette étape d'implantation comprenant au moins une étape pour percer un trou dans ce garde-boue, une étape pour disposer dans ce trou la pièce de connexion mécanique et électrique qui comprend une partie supérieure s'appuyant contre la face extérieure dudit garde-boue et, au niveau de la face intérieure de celui-ci, des pattes de sertissage, caractérisé en ce que l'étape de coextrusion comprend en outre une coextrusion d'au moins un conducteur d'alimentation, avec l'âme métallique et le revêtement plastique de sorte que ce conducteur d'alimentation se trouve noyé dans le revêtement plastique à proximité de la face intérieure dudit garde-boue, en ce que chaque trou est percé à proximité du conducteur d'alimentation coextrudé et en ce que l'étape d'implantation comprend en outre, pour chaque trou :
- une étape pour réaliser un lamage de ce trou sur la face intérieure du garde-boue, la profondeur et le diamètre de ce lamage étant déterminés de sorte que le conducteur d'alimentation devienne accessible au fond dudit lamage; et
- une étape pour réaliser, par sertissage des pattes de la pièce de connexion unique dans le lamage, un contact électrique permanent entre le conducteur d'alimentation et la pièce de connexion.

D'autres particularités et avantages de l'invention apparaîtront encore dans la description ci-après. Aux dessins annexés donnés à titre d'exemples non limitatifs:
- la figure 1A est une première vue en coupe d'un premier exemple de réalisation d'un garde-boue selon l'invention, dans lequel le conducteur d'alimentation est disposé sur la face intérieure de ce garde-boue ;
- la figure 1B est une première vue en coupe d'un second exemple de réalisation d'un garde-boue selon l'invention, dans lequel le conducteur d'alimentation est disposé sur la face extérieure de ce garde-boue ;
- la figure 2A est une seconde vue en coupe du premier exemple de réalisation de garde-boue selon l'invention, effectuée au niveau d'un trou de connexion ;
- la figure 2B est une seconde vue en coupe du second exemple de réalisation de garde-boue selon l'invention, effectuée au niveau d'un trou de connexion ;
- la figure 3A est une vue développée de l'intérieur du premier exemple de réalisation d'un garde-boue selon l'invention, au niveau d'un trou de connexion ;
- la figure 3B est une vue en perspective partielle d'un trou de connexion dans le second exemple de réalisation d'un garde-boue selon l'invention ;
- la figure 4 est une vue agrandie en coupe d'un trou de connexion muni d'un bouton-pression, au sein du premier exemple de réalisation d'un garde-boue selon l'invention ;
- la figure 5 est une vue en coupe du trou de connexion de la figure 4, effectuée au niveau du lamage ;
- la figure 6A est une première vue en coupe d'un troisième exemple de réalisation d'un garde-boue selon l'invention, mettant en oeuvre un écrasement du conducteur d'alimentation au niveau de chaque trou ;
- la figure 6B est une seconde vue en coupe du troisième exemple de réalisation d'un garde-boue selon l'invention ;
- la figure 7A est une vue en coupe d'un quatrième exemple de réalisation d'un garde-boue selon l'invention, mettant en oeuvre une pièce de connexion unique, avant sertissage ;
- la figure 7B est une vue en coupe du quatrième exemple de réalisation de la figure 7A, après sertissage;
- la figure 8A illustre un premier mode de connexion mis en oeuvre dans un garde-boue selon l'invention, mettant en oeuvre deux conducteurs d'alimentation ;
- la figure 8B illustre un second mode de connexion mis en oeuvre dans un garde-boue selon l'invention, mettant en oeuvre trois conducteurs d'alimentation ; et
- la figure 8C illustre un troisième mode de connexion mis en oeuvre dans un garde-boue selon l'invention, mettant en oeuvre un conducteur d'alimentation.

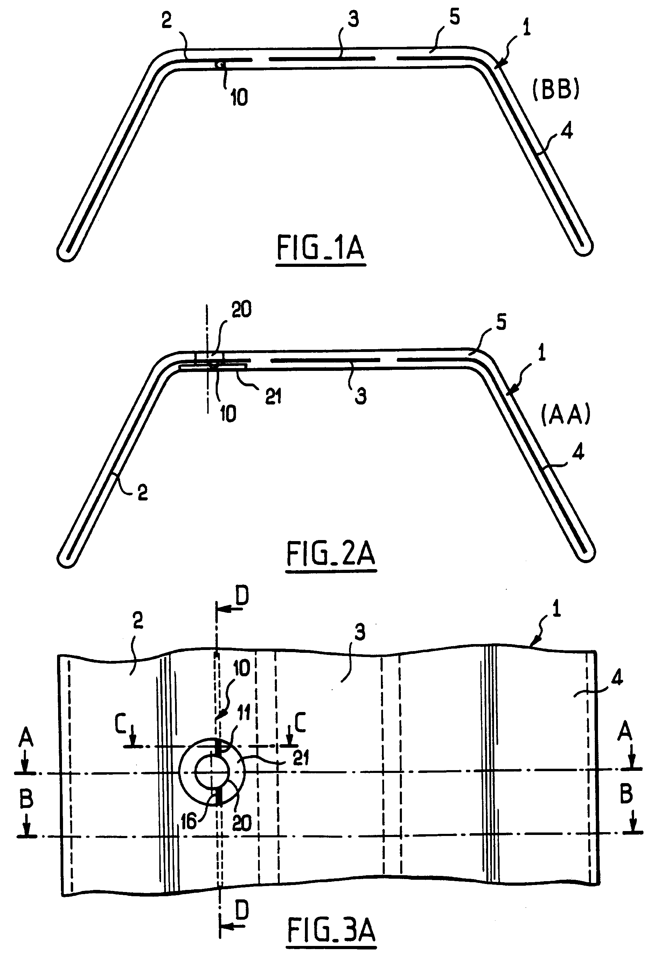

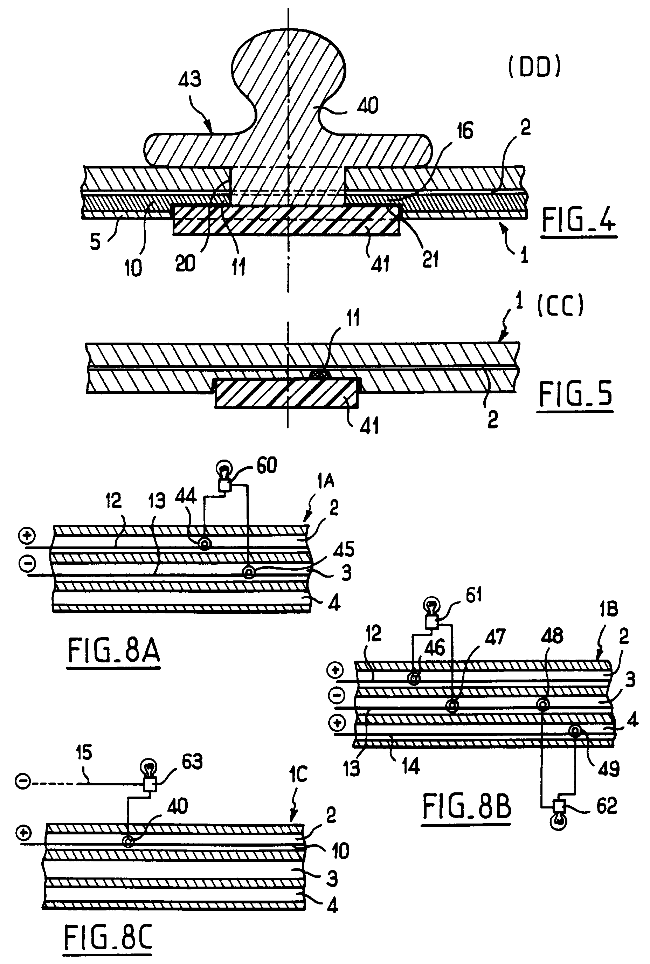

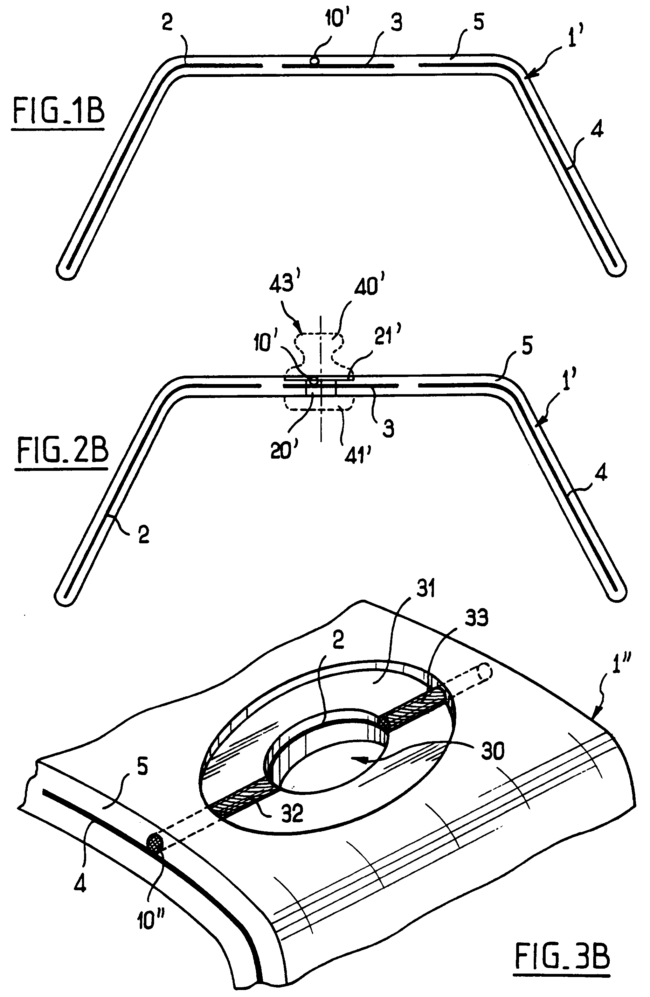

On va maintenant décrire plusieurs exemples de réalisation d'un garde-boue selon l'invention, en même temps que plusieurs procédés de réalisation et modes de connexion mis en oeuvre dans ce garde-boue, en référence aux figures 1 à 8C.

Dans un premier exemple de réalisation illustré par les figures 1A, 2A, 3A, 4 et 5, un garde-boue 1 comporte trois âmes métalliques 2, 3, 4 coextrudées avec un revêtement plastique 5 et un conducteur d'alimentation 10 noyé dans ce revêtement et disposé contre la face intérieure de l'âme métallique 2. Ce conducteur d'alimentation est, par exemple, relié à l'un des pôles d'un générateur de tension du type dynamo (non représenté). Le garde-boue 1 comporte des trous de connexion 20 réalisés de façon à interrompre le conducteur d'alimentation 10. Ces trous 20 sont prévus pour recevoir des éléments 40, 41 pour connecter mécaniquement et électriquement un dispositif d'éclairage. Chaque trou 20 comprend sur la face intérieure du garde-boue 1 un lamage 21 de diamètre et de profondeur déterminées de façon à rendre accessible des parties 11, 16 du conducteur d'alimentation 10. Ce lamage est réalisé jusqu'à ce que soit atteint le conducteur d'alimentation 10 qui est alors partiellement amputé sur ses deux segments d'extrémité 11, 16. Un bouton-pression 43 comprend une première pièce mâle de connexion 40 conductrice électrique, s'étendant sur la face extérieure du garde-boue 1 et une seconde pièce de connexion 41 conductrice électrique, par exemple un rivet ou encore un écrou, s'appuyant sur la face intérieure du garde-boue 1, logée dans le lamage 21 et reliée mécaniquement à la première pièce de connexion 40 à travers le trou 20. Cette seconde pièce de connexion 41 maintient un contact électrique permanent avec les parties accessibles 11, 16 du conducteur d'alimentation 10 qui peut ainsi être relié électriquement à la partie mâle du bouton-pression 40.

Dans un second exemple de réalisation d'un garde-boue 1' selon l'invention illustré par les figures 1B, 2B et 3B, un conducteur d'alimentation 10' est coextrudé avec trois âmes métalliques 2, 3, 4 et un revêtement plastique 5, de telle façon que ce conducteur soit situé sur la face extérieure d'une âme métallique 3, en référence à la figure 1B. Un trou 20' est percé dans le garde-boue 1' de telle manière qu'il interrompe le conducteur d'alimentation 10'. Le trou 20' est pourvu sur la face extérieure du garde-boue 1' d'un lamage 21' de diamètre et de profondeur déterminés de telle sorte que les deux parties d'extrémité du conducteur au fond du lamage deviennent accessibles. Un bouton-pression 43' comprend une première pièce de connexion 40' constituant une partie mâle s'étendant à l'extérieur du garde-boue 1' et une seconde pièce de connexion 41' placée contre la face intérieure de ce garde-boue 1', ces deux pièces de connexion étant reliées mécaniquement, par exemple par sertissage ou encore par vissage via le trou de connexion 20'. La base de la première pièce de connexion 40' est maintenue en contact électrique permanent sur le fond du lamage 21' avec la partie accessible du conducteur d'alimentation 10'. On comprendra mieux l'agencement d'un trou de connexion 30 en se référant à la figure 3B. Le trou 30 est réalisé dans un garde-boue 1'' au niveau d'une âme métallique 4 coextrudée avec un revêtement plastique 5. Il comporte un lamage 31 de diamètre supérieur au diamètre dudit trou et de profondeur telle que soit rendu accessible le conducteur d'alimentation 10'' coextrudé avec l'âme métallique 4. Au niveau du lamage 31, le conducteur 10'' est ainsi partiellement amputé sur deux parties 32, 33 de part et d'autre du trou 30 qui vont entrer en contact électrique avec la base de la pièce de connexion qui sera logée dans le lamage 31.

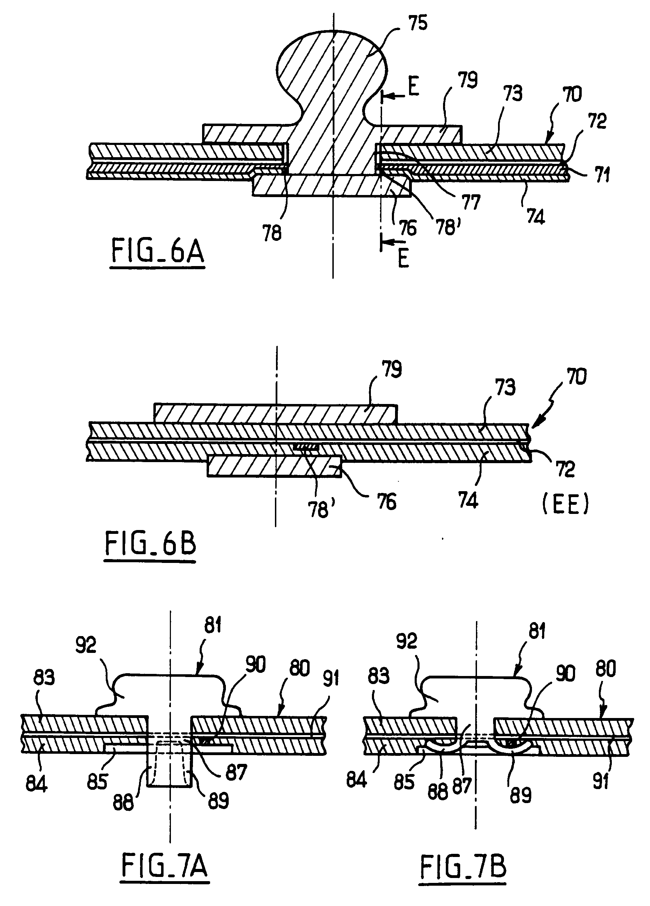

Dans un troisième exemple de réalisation d'un garde-boue selon l'invention, illustré par les figures 6A et 6B, on perce dans un garde-boue 70 comportant un conducteur d'alimentation 71 coextrudé avec une âme métallique 72 et un revêtement plastique 73, 74, un trou 77 de sorte que ce trou interrompe le conducteur d'alimentation 71 qui présente alors deux extrémités 78, 78' affleurant la paroi intérieure du trou 77. On insère alors dans celui-ci un bouton-pression comprenant une première pièce de connexion 75 présentant une couronne 79 s'appuyant contre la face extérieure du garde-boue 70 et une seconde pièce de connexion 76 s'appuyant contre la face intérieure dudit garde-boue 70. Le serrage des deux pièces de connexion 75, 76 du bouton-pression a pour effet d'écraser la région périphérique de la face intérieure du garde-boue en regard de la seconde pièce de connexion 76 de sorte que les deux extrémités 78, 78 se trouvent écrasées et, du fait de leur élongation, viennent en contact électrique permanent avec la partie intérieure du bouton-pression en regard du conducteur d'alimentation. On obtient ainsi une liaison électrique permanente entre le conducteur d'alimentation et le bouton-pression.

Dans un quatrième exemple de réalisation illustré par les figures 7A et 7B, on utilise un bouton-pression 81 constituant une pièce de connexion unique comportant une partie supérieure 92 venant en appui contre la face extérieure du garde-boue 80 et des pattes de sertissage 88, 89 qui, après introduction du bouton-pression 81 dans un trou 87, sont ensuite écartées et plaquées contre le fond d'un lamage 85 réalisé sur la face intérieure du trou 87. Ce trou est percé à proximité d'un conducteur d'alimentation 90 coextrudé avec une âme métallique 91 et un revêtement plastique 83, 84, sans toutefois interrompre ce conducteur. Le lamage 85 doit présenter une forme et une profondeur appropriées pour rendre accessible le conducteur d'alimentation 90, de sorte qu'au moins une des pattes de sertissage 89 vienne en contact électrique permanent avec ce conducteur d'alimentation 90, à l'issue de l'opération de sertissage du bouton-pression 81.

Dans un premier mode d'alimentation, en référence à la figure 8C, pour un garde-boue 1C un premier pôle d'un dispositif d'éclairage 63 est relié par un bouton-pression 40 à un conducteur d'alimentation 10 relié à un pôle + d'un générateur de tension, tandis que son second pôle est relié à l'autre pôle - du générateur par des pièces de fixation 15 conductrices.

Dans un second mode d'alimentation, en référence à la figure 8A, pour un garde-boue 1A un premier conducteur d'alimentation 12 est relié à un premier pôle + d'un générateur de tension, tandis qu'un second conducteur d'alimentation 13 est relié à un second pôle - de ce générateur. Un dispositif d'éclairage 60 est relié à ses pôles reliés par des boutons-pression de connexion 44, 45 aux deux conducteurs d'alimentation 12, 13.

Dans un troisième mode d'alimentation, en référence à la figure 8B, trois conducteurs d'alimentation 12, 13, 14 sont coextrudés pour un garde-boue 1B. Le premier conducteur 12, est relié au pôle + d'un générateur de tension et le second conducteur 13 est relié au pôle - . Un premier dispositif d'éclairage 61 est relié aux deux conducteurs d'alimentation 12, 13 respectivement par deux boutons-pression de connexion 46, 47. Le troisième conducteur 14 est relié au pôle + d'un générateur de tension. Un second dispositif d'éclairage 62 est relié aux deux conducteurs d'alimentation 13, 14 respectivement par deux boutons-pression de connexion 48, 49.

Dans un mode de réalisation pratique et à titre d'exemple non limitatif, l'âme métallique peut être un feuillard d'aluminium, ayant par exemple une épaisseur de 5/100 mm. Le conducteur d'alimentation peut être un câble sous la forme d'un toron non isolé pouvant atteindre un diamètre de 6/10 mm, ou encore un fil de section ronde ou bien rectangulaire. Les pièces de connexion peuvent être des boutons-pression spécifiques ou encore de type standard, pourvu qu'ils soient réalisés en matériau électriquement conducteur.

Bien sûr, l'invention n'est pas limitée aux exemples qui viennent d'être décrits et de nombreux aménagements peuvent être apportés à ces exemples sans sortir du cadre de l'invention. Ainsi, on peut mettre en oeuvre tout type de matériau pour le revêtement plastique. De même, le nombre d'âmes métalliques, de conducteurs d'alimentation et de dispositifs d'éclairage n'est pas limité par l'invention.

## Revendications

1. Garde-boue (1, 1', 1'', 1A, 1B, 1C, 70, 80) pour bicyclette, comprenant au moins une âme métallique (2, 3, 4, 72, 91) coextrudée avec un revêtement plastique (5, 73-74, 83-84), au moins un dispositif d'éclairage (60-63) relié à ce garde-boue (1, 1', 1'', 1A, 1B, 1C, 70, 80) par des moyens de connexion mécanique et électrique (40, 41, 40', 41', 75-76, 81), et des moyens pour alimenter ce dispositif d'éclairage (60-63), comprenant en outre, au titre des moyens d'alimentation, au moins un conducteur d'alimentation (10, 10', 10'', 12, 13, 14, 71, 90) coextrudé avec l'une des âmes métalliques (2, 3, 4, 72, 91) et avec le revêtement plastique (5, 73-74, 83-84), et les moyens de connexion mécanique et électrique (40, 41, 40', 41', 75-76, 81) étant agencés pour relier électriquement ce conducteur d'alimentation (10, 10', 10'', 12, 13, 14, 71, 90) à au moins un pôle du dispositif d'éclairage (60-63), caractérisé en ce que le conducteur d'alimentation (10, 10', 10'', 71, 90) est placé en contact contre une face de l'une des âmes métalliques coextrudées (2, 3, 4).

2. Garde-boue (1, 1') selon la revendication 1, les moyens de connexion mécanique et électrique comprenant une première pièce de connexion conductrice électrique (40, 40') s'étendant à l'extérieur dudit garde-boue (1, 1') et une seconde pièce de connexion conductrice électrique (41, 41') s'appuyant contre la face intérieure dudit garde-boue (1, 1') et reliée mécaniquement à ladite première pièce de connexion (40, 41') à travers un trou (20, 20') ménagé dans ledit garde-boue (1, 1'), caractérisé en ce que ce trou (20, 20') est disposé de façon à interrompre le conducteur d'alimentation (10, 10') et est pourvu, sur l'une des faces dudit garde-boue (1, 1'), d'un lamage (21, 21') de forme et d'épaisseur déterminées de sorte que le conducteur d'alimentation coextrudé (10, 10') est accessible au fond de ce lamage (21, 21') et en ce que la pièce de connexion (41, 40') correspondant à la face comportant ledit lamage (21, 21') est maintenue par les moyens de connexion électrique et mécanique (40, 41, 40', 41') en contact électrique permanent avec au moins une partie accessible (11, 16) dudit conducteur d'alimentation (10, 10').

3. Garde-boue (1) selon la revendication 2, caractérisé en ce que le conducteur d'alimentation (10) est disposé au niveau de la face intérieure dudit garde-boue (1), et en ce que le lamage (21) est réalisé sur la face intérieure dudit garde-boue (1) et en ce que la seconde pièce de connexion (41) maintient sur le fond dudit lamage (21) un contact électrique permanent avec au moins une partie accessible (11, 16) du conducteur d'alimentation (10).

4. Garde-boue (1') selon la revendication 2, caractérisé en ce que le conducteur d'alimentation (10') est disposé au niveau de la face extérieure dudit garde-boue (1'), en ce que le lamage (21') est réalisé sur la face extérieure dudit garde-boue (1') et en ce que la première pièce de connexion (40') maintient sur le fond dudit lamage (21') un contact électrique permanent avec au moins une partie accessible du conducteur d'alimentation (10').

5. Garde-boue (70) selon la revendication 1, les moyens de connexion mécanique et électrique comprenant une première pièce de connexion conductrice électrique (75) s'étendant à l'extérieur dudit garde-boue (70) et une seconde pièce de connexion conductrice électrique (76) s'appuyant contre la face intérieure dudit garde-boue (70) et reliée mécaniquement à ladite première pièce de connexion (75) à travers un trou (77) ménagé dans ledit garde-boue (70), caractérisé en ce que ce trou (77) est disposé de façon à interrompre le conducteur d'alimentation (71) qui présente alors deux extrémités de conducteur (78, 78') affleurant la paroi intérieure dudit trou (77), et en ce que la première pièce de connexion (75) et la seconde pièce de connexion (76) coopèrent pour écraser le conducteur d'alimentation (71) de sorte que les extrémités de conducteur (78, 78') viennent en contact permanent avec celle desdites première ou seconde pièces de connexion (75, 76) qui occupe ledit trou (77) en regard du conducteur d'alimentation (71).

6. Garde-boue (1, 1') selon l'une des revendications 2 à 5, caractérisé en ce que la première pièce de connexion comprend une partie mâle (40, 40') d'un bouton-pression.

7. Garde-boue selon la revendication 6, caractérisé en ce que la première pièce de connexion comporte en outre une partie cylindrique filetée introduite dans le trou et en ce que la seconde pièce de connexion comprend un écrou et une rondelle de blocage.

8. Garde-boue (1, 1') selon la revendication 6, caractérisé en ce que la seconde pièce de connexion comprend un rivet (41, 41') prévu pour être serti mécaniquement avec la première pièce de connexion (40, 40') à travers le trou de connexion (20, 20').

9. Garde-boue (80) selon la revendication 1, les moyens de connexion mécanique et électrique comprenant, pour chaque trou, une pièce de connexion conductrice unique (81) comprenant une Partie supérieure (92) s'appuyant contre la face extérieure du garde-boue (80) et une partie inférieure comportant des pattes de sertissage (88, 89), caractérisé en ce que chaque- trou (87) est réalisé à proximité du conducteur d'alimentation (90) et est pourvu, sur la face intérieure dudit garde-boue (1, 1'), d'un lamage (85) de forme et d'épaisseur déterminées pour rendre accessible le conducteur d'alimentation (90) et pour recevoir lesdites pattes (88, 89) après sertissage, de sorte que le conducteur d'alimentation (90) se trouve en contact électrique permanent avec l'une au moins desdites pattes serties (89).

10. Garde-boue (1C) selon l'une des revendications précédentes, comprenant au moins une âme métallique coextrudée (2), caractérisé en ce qu'il comprend un conducteur d'alimentation (10) associé à cette âme métallique (2), pour relier un premier pôle (+) d'un générateur de tension à un pôle d'au moins un dispositif d'éclairage (63) dont l'autre pôle est relié au second pôle (-) dudit générateur de tension via des pièces de fixation conductrices (15).

11. Garde-boue (1A) selon l'une des revendications 1 à 9, comprenant au moins une première et une seconde âmes métalliques coextrudées (2, 3), caractérisé en ce qu'il comprend au moins un premier et un second conducteurs d'alimentation (12, 13) associés respectivement aux première et seconde âmes métalliques (2, 3), pour relier respectivement un premier et un second pôles (+, -) d'un générateur de tension au premier et au second pôles d'au moins un dispositif d'éclairage (60).

12. Garde-boue (1B) selon l'une des revendications 1 à 9, comprenant au moins une première, une seconde et une troisième âmes métalliques coextrudées (2, 3, 4), caractérisé en ce qu'il comprend au moins un premier, un second et un troisième conducteurs d'alimentation (12, 13, 14) associés respectivement aux première, seconde et troisième âmes métalliques (2, 3, 4), deux (12, 14) desdits conducteurs d'alimentation étant prévus pour relier un premier pôle (+) d'un générateur de tension à un premier pôle d'au moins un dispositif d'éclairage (61) et le troisième conducteur (13) étant prévu pour relier le second pôle dudit générateur de tension au second pôle du dispositif d'éclairage (61).

13. Garde-boue (1'') selon l'une des revendications précédentes, caractérisé en ce que le conducteur d'alimentation (10'' est un toron non isolé.

14. Garde-boue (70) selon l'une des revendications précédentes, caractérisé en ce que le conducteur d'alimentation (71) est un fil.

15. Garde-boue (70) selon la revendication 15, caractérisé en ce que ce fil (71) est de section rectangulaire.

16. Procédé pour réaliser un garde-boue (1, 1', 1'') selon l'une des revendications 2 à 4, comprenant une étape pour coextruder au moins une âme métallique (2, 3, 4) avec un revêtement plastique (5) suivant une conformation prédéterminée, et au moins une étape pour implanter des moyens (40, 40', 41, 41') pour connecter mécaniquement et électriquement au moins un dispositif d'éclairage (60-63) à ce garde-boue (1, 1', 1''), cette étape d'implantation comprenant au moins une étape pour percer un trou (20, 20', 30) dans ce garde-boue (1, 1', 1''), une étape pour disposer dans ce trou les moyens de connexion mécanique et électrique comprenant une première pièce de connexion (40, 40') s'étendant sur la face extérieure du garde-boue (1, 1') et une seconde pièce de connexion (41, 41') située sur la face intérieure dudit garde-boue (1, 1'), caractérisé ce que l'étape de coextrusion comprend en outre une coextrusion d'au moins un conducteur d'alimentation (10, 10', 10''), avec l'âme métallique (2, 3) et le revêtement plastique de sorte que ce conducteur d'alimentation se trouve noyé dans ledit revêtement plastique à proximité de l'une des faces dudit garde-boue, en ce que chaque trou (20, 20', 30) est percé de façon à interrompre le conducteur d'alimentation coextrudé (10, 10', 10'') et en ce que l'étape d'implantation comprend en outre, pour chaque trou :
- une étape pour réaliser un lamage de ce trou sur ladite face, la profondeur et le diamètre de ce lamage étant déterminés de sorte qu'au moins une portion de ce conducteur d'alimentation devienne accessible au fond dudit lamage ; et
- une étape pour réaliser un contact électrique permanent entre cette portion accessible et la pièce des moyens de connexion mécanique et électrique qui correspond à la face comportant ledit lamage.

17. Procédé pour réaliser un garde-boue (70) selon la revendication 5, comprenant une étape pour coextruder au moins une âme métallique (72) avec un revêtement plastique (73, 74) suivant une conformation prédéterminée, et au moins une étape pour implanter des moyens (75, 76) pour connecter mécaniquement et électriquement au moins un dispositif d'éclairage à ce garde-boue (70), cette étape d'implantation comprenant au moins une étape pour percer un trou (77) dans ce garde-boue (70), une étape pour disposer dans ce trou (77) les moyens de connexion mécanique et électrique comprenant une première pièce de connexion (75) s'étendant sur la face extérieure du garde-boue (70) et une seconde pièce de connexion (76) située sur la face intérieure dudit garde-boue (70), caractérisé en ce que l'étape de coextrusion comprend en outre une coextrusion d'au moins un conducteur d'alimentation (71), avec l'âme métallique (72) et le revêtement plastique (73, 74) de sorte que ce conducteur d'alimentation (71) se trouve noyé dans ledit revêtement plastique (73, 74) à proximité de l'une des faces dudit garde-boue (70), en ce que chaque trou (77) est percé de façon à interrompre le conducteur d'alimentation coextrudé (71) et en ce que l'étape d'implantation comprend en outre, pour chaque trou (77), un écrasement, par l'une (76) des pièces de connexion (75, 76), des extrémités (78, 78') du conducteur d'alimentation (71) qui affleurent ledit trou (77), de sorte que ces extrémités de conducteur (78, 78') viennent en contact permanent avec celle desdites première ou seconde pièces de connexion (75, 76) qui occupe ledit trou (77) en regard desdites extrémités de conducteur (78, 78').

18. Procédé pour réaliser un garde-boue (80) selon la revendication 9, comprenant une étape pour coextruder au moins une âme métallique (91) avec un revêtement plastique (83-84) suivant une conformation prédéterminée, et au moins une étape pour implanter une pièce unique (81) pour connecter mécaniquement et électriquement au moins un dispositif d'éclairage à ce garde-boue (80), cette étape d'implantation comprenant au moins une étape pour percer un trou (87) dans ce garde-boue (80), une étape pour disposer dans ce trou (87) la pièce de connexion mécanique et électrique (81) qui comprend une partie supérieure s'appuyant contre la face extérieure dudit garde-boue (80) et, au niveau de la face intérieure de celui-ci, des pattes de sertissage (88, 89), caractérisé ce que l'étape de coextrusion comprend en outre une coextrusion d'au moins un conducteur d'alimentation (90), avec l'âme métallique (91) et le revêtement plastique (83, 84) de sorte que ce conducteur d'alimentation (90) se trouve noyé dans ledit revêtement plastique à proximité de la face intérieure dudit garde-boue (80), en ce que chaque trou (87) est percé à proximité du conducteur d'alimentation coextrudé (90) et en ce que l'étape d'implantation comprend en outre, pour chaque trou :
- une étape pour réaliser un lamage (85) de ce trou (87) sur la face intérieure du garde-boue (80), la profondeur et le diamètre de ce lamage étant déterminés de sorte que le conducteur d'alimentation (90) devienne accessible au fond dudit lamage (85); et
- une étape pour réaliser, par sertissage des pattes (88, 89) de la pièce de connexion unique (81) dans le lamage (85), un contact électrique permanent entre le conducteur d'alimentation (90) et ladite pièce de connexion (81).

## Claims

1. Mudguard (1, 1', 1'', 1A, 1B, 1C, 70, 80) for a bicycle, comprising at least one metal core (2, 3, 4, 72, 91) co-extruded with a plastic coating (5 73-74, 83-84), at least one lighting device (60-63) linked to this mudguard (1, 1', 1'', 1A, 1B, 1C, 70, 80) by mechanical and electrical connecting means (40, 41, 40', 41', 75-76, 81), and means for supplying power to this lighting device (60-63), further comprising, by way of power supply means, at least one power supply conductor (10, 10', 10'', 12, 13, 14, 71, 90) co-extruded with one of the metal cores (2, 3, 4, 72, 91) and with the plastic coating (5, 73-74, 83-84), and the mechanical and electrical connecting means (40, 41, 40', 41', 75-76, 81) being configured to link this power supply conductor (10, 10', 10'', 12, 13, 14, 71, 90) electrically to at least one pole of the lighting device (60-63), characterized in that the power supply conductor (10, 10', 10'', 71, 90) is placed in contact against one face of one of the co-extruded metal cores (2, 3, 4).

2. Mudguard (1, 1') according to Claim 1, the mechanical and electrical connecting means comprising a first electrically conducting connecting piece (40, 40') extending outside said mudguard (1, 1') and a second electrically conducting connecting piece (41, 41') pressing against the inner face of said mudguard (1, 1') and linked mechanically to said first connecting piece (40, 41') through a hole (20, 20') formed in said mudguard (1, 1'), characterized in that this hole (20, 20') is arranged in such a way as to break the power supply conductor (10, 10') and is provided, on one of the faces of the said mudguard (1, 1'), with a countersinking (21, 21') of a shape and a thickness which are defined such that the co-extruded power supply conductor (10, 10') is accessible at the bottom of this countersinking (21, 21'), and in that the connecting piece (41, 40') corresponding to the face including said countersinking (21, 21') is held by the electrical and mechanical connecting means (40, 41, 40', 41') in permanent electrical contact with at least one accessible part (11, 16) of the said power supply conductor (10, 10').

3. Mudguard (1) according to Claim 2, characterized in that the power supply conductor (10) is arranged in the region of the inner face of said mudguard (1), and in that the countersinking (21) is formed on the inner face of said mudguard (1), and in that the second connecting piece (41) maintains permanent electrical contact, on the bottom of said countersinking (21), with at least one accessible part (11, 16) of the power supply conductor (10).

4. Mudguard (1') according to Claim 2, characterized in that the power supply conductor (10') is arranged in the region of the outer face of said mudguard (1'), in that the countersinking (21') is formed on the outer face of said mudguard (1') and in that the first connecting piece (40') maintains permanent electrical contact, on the bottom of said countersinking (21'), with at least one accessible part of the power supply conductor (10').

5. Mudguard (70) according to Claim 1, the mechanical and electrical connecting means comprising a first electrically conducting connecting piece (75) extending outside said mudguard (70) and a second electrically conducting connecting piece (76) pressing against the inner face of said mudguard (70) and mechanically linked to said first connecting piece (75) through a hole (77) formed in said mudguard (70), characterized in that this hole (77) is arranged in such a way as to break the power supply conductor (71) which then exhibits two conductor ends (78, 78') coming flush with the inner wall of the said hole (77), and in that the first connecting piece (75) and the second connecting piece (76) interact to squeeze the power supply conductor (71) in such a way that the conductor ends (78, 78') come into permanent contact with that one of said first or second connecting pieces (75, 76) which occupies said hole (77) facing the power supply conductor (71).

6. Mudguard (1, 1') according to one of Claims 2 to 5, characterized in that the first connecting piece comprises a male part (40, 40') of a press stud.

7. Mudguard according to Claim 6, characterized in that the first connecting piece further includes a threaded cylindrical part inserted into the hole and in that the second connecting piece comprises a nut and a lock washer.

8. Mudguard (1, 1') according to Claim 6, characterized in that the second connecting piece comprises a rivet (41, 41') designed to be crimped mechanically with the first connecting piece (40, 40') through the connecting hole (20, 20').

9. Mudguard (80) according to Claim 1, the mechanical and electrical connecting means comprising, for each hole, a single conducting connecting piece (81) comprising an upper part (92) pressing against the outer face of the mudguard (80) and a lower part including crimping lugs (88, 89), characterized in that each hole (87) is produced close to the power supply conductor (90) and is provided, on the inner face of the said mudguard (1, 1') with a countersinking (85) of a form and thickness which are defined so as to render the power supply conductor (90) accessible and to accommodate the said lugs (88, 89) after crimping, so that the power supply conductor (90) is in permanent electrical contact with at least one of the said crimped lugs (89).

10. Mudguard (1C) according to one of the preceding claims, comprising at least one co-extruded metal core (2), characterized in that it comprises a power supply conductor (10) associated with this metal core (2), to link a first (+) pole of a voltage generator to a pole of at least one lighting device (63), the other pole of which is linked to the second (-) pole of said voltage generator via conducting fixing pieces (15).

11. Mudguard (1A) according to one of Claims 1 to 9, comprising at least a first and a second co-extruded metal core (2, 3), characterized in that it comprises at least a first and a second power supply conductor (12, 13) associated respectively with the first and second metal cores (2, 3), in order to link a first and a second pole (+, -) respectively of a voltage generator to the first and to the second poles of at least one lighting device (60).

12. Mudguard (1B) according to one of Claims 1 to 9, comprising at least a first, a second and a third co-extruded metal core (2, 3, 4), characterized in that it comprises at least a first, a second and a third power supply conductor (12, 13, 14) associated respectively with the first, second and third metal cores (2, 3, 4), two (12, 14) of said power supply conductors being intended to link a first (+) pole of a voltage generator to a first pole of at least one lighting device (61), and the third conductor (13) being intended to link the second pole of said voltage generator to the second pole of the lighting device (61).

13. Mudguard (1'') according to one of the preceding claims, characterized in that the power supply conductor (10'') is an uninsulated strand.

14. Mudguard (70) according to one of the preceding claims, characterized in that the power supply conductor (71) is a wire.

15. Mudguard (70) according to Claim 15, characterized in that this wire (71) is of rectangular cross section.

16. Method for producing a mudguard (1, 1', 1'') according to one of Claims 3 to 5, comprising a step for co-extruding at least one metal core (2, 3, 4) with a plastic coating (5) according to a predetermined shaping, and at least one step for fitting means (40, 40', 41, 41') for mechanically and electrically connecting at least one lighting device (60-63) to this mudguard (1, 1', 1''), this fitting step comprising at least a step for piercing a hole (20, 20', 30) in this mudguard (1, 1', 1''), a step for arranging in this hole the mechanical and electrical connecting means comprising a first connecting piece (40, 40') extending over the outer face of the mudguard (1, 1') and a second connecting piece (41, 41') situated on the inner face of said mudguard (1, 1'), characterized in that the co-extrusion step further comprises a co-extrusion of at least one power supply conductor (10, 10', 10''), with the metal core (2, 3) and the plastic coating in such a way that this power supply conductor is embedded in said plastic coating close to one of the faces of said mudguard, in that each hole (20, 20', 30) is pierced in such a way as to break the co-extruded power supply conductor (10, 10', 10'') and in that the fitting stage further comprises, for each hole:
- a step for producing a countersinking of this hole on said face, the depth and the diameter of this countersinking being determined in such a way that at least a portion of this power supply conductor becomes accessible at the bottom of said countersinking; and
- a step for forming a permanent electrical contact between this accessible portion and that piece of the mechanical and electrical connecting means which corresponds to the face including said countersinking.

17. Method for producing a mudguard (70) according to Claim 5, comprising a step for co-extruding at least one metal core (72) with a plastic coating (73, 74) according to a predetermined shaping, and at least one step for fitting means (75, 76) for mechanically and electrically connecting at least one lighting device to this mudguard (70), this fitting step comprising at least a step for piercing a hole (77) in this mudguard (70), a step for arranging in this hole (77) the mechanical and electrical connecting means comprising a first connecting piece (75) extending over the outer face of the mudguard (70) and a second connecting piece (76) situated on the inner face of said mudguard (70), characterized in that the co-extrusion step further comprises a co-extrusion of least one power supply conductor (71), with the metal core (72) and the plastic coating (73, 74) in such a way that this power supply conductor (71) is embedded in said plastic coating (73, 74) close to one of the faces of said mudguard (70), in that each hole (77) is pierced in such a way as to break the co-extruded power supply conductor (71) and in that the fitting stage further comprises, for each hole (77), the squeezing, by one (76) of the connecting pieces (75, 76), of the ends (78, 78') of the power supply conductor (71) which come flush with said hole (77), in such a way that these conductor ends (78, 78') come into permanent contact with that one of said first or second connecting pieces (75, 76) which occupies said hole (77) facing said conductor ends (78, 78').

18. Method for producing a mudguard (80) according to Claim 9, comprising a step for co-extruding at least one metal core (91) with a plastic coating (83-84) according to a predetermined shaping, and at least one step for fitting a single piece (81) for mechanically and electrically connecting at least one lighting device to this mudguard (80), this fitting step comprising at least a step for piercing a hole (87) in this mudguard (80), a step for arranging in this hole (87) the mechanical and electrical connecting piece which comprises an upper part pressing against the outer face of the said mudguard (80) and, on the inner face thereof, crimping lugs (88, 89), characterized in that the co-extrusion step further comprises a co-extrusion of least one power supply conductor (90), with the metal core (91) and the plastic coating (83, 84) in such a way that this power supply conductor (90) is embedded in said plastic coating close to the inner face of said mudguard (80), in that each hole (87) is pierced close to the co-extruded power supply conductor (90) and in that the fitting stage further comprises, for each hole:
- a step for producing a countersinking (85) of this hole (87) on the inner face of the mudguard (80), the depth and the diameter of this countersinking being defined such that the power supply conductor (90) becomes accessible at the bottom of said countersinking (85); and
- a step for forming a permanent electrical contact between the power supply conductor (90) and said connecting piece (81), by crimping of the lugs (88, 89) of the single connecting piece (81) in the countersinking (85).

## Patentansprüche

1. Schutzblech (1, 1', 1'', 1A, 1B, 1C, 70, 80) für Fahrrad, das folgendes aufweist: wenigstens einen mit einem Kunststoffüberzug (5, 73-74, 83-84) koextrudierten Metallkern (2, 3, 4, 72, 91), wenigstens eine mit diesem Schutzblech (1, 1', 1'', 1A, 1B, 1C, 70, 80) über mechanische und elektrische Verbindungseinrichtungen (40, 41, 40', 41', 75-76, 81) verbundene Beleuchtungsvorrichtung (60-63) und Einrichtungen zum Speisen dieser Beleuchtungsvorrichtung (60-63), und das darüber hinaus als Speiseeinrichtungen folgendes aufweist: wenigstens eine mit einem der Metallkerne (2, 3, 4, 72, 91) und dem Kunststoffuberzug (5, 73-74, 83-84) koextrudierte Zuleitung (10, 10', 10'', 12, 13, 14, 71, 90), wobei die mechanischen und elektrischen Verbindungseinrichtungen (40, 41, 40', 41', 75-76, 81) zur elektrisch leitenden Verbindung dieser Zuleitung (10, 10', 10'', 12, 13, 14, 71, 90) mit wenigstens einem Pol der Beleuchtungsvorrichtung (60-63) ausgelegt sind, dadurch gekennzeichnet, daß die Zuleitung (10, 10', 10'', 71, 90) in Kontakt zu einer Außenfläche von einem der koextrudierten Metallkerne (2, 3, 4) gebracht ist.

2. Schutzblech (1, 1') nach Anspruch 1, wobei die mechanischen und elektrischen Verbindungseinrichtungen ein erstes elektrisch leitendes Verbindungselement (40, 40'), das sich von Schutzblech (1, 1') nach außen erstreckt, und ein zweites elektrisch leitendes Verbindungselement (41, 41'), das gegen die Innenfläche des Schutzbleches (1, 1') gepreßt und mechanisch mit dem ersten Verbindungselement (40, 41') durch ein in dem Schutzblech (1, 1') vorgesehenes Loch (20, 20') verbunden ist, aufweisen, dadurch gekennzeichnet, daß dieses Loch (20, 20') so angeordnet ist, daß es die Zuleitung (10, 10') unterbricht und auf einer der Flächen des Schutzbleches (1, 1') mit einer Aussparung (21, 21') von bestimmter Form und Tiefe so versehen ist, daß die koextrudierte Zuleitung (10, 10') vom Boden dieser Aussparung (21, 21') aus zugänglich ist, und dadurch daß das Verbindungselement (40, 41'), das mit der Fläche, die die Aussparung (21, 21') aufweist, übereinstimmt, über die elektrischen und mechanischen Verbindungseinrichtungen (40, 41, 40', 41') in permanentem elektrischem Kontakt mit wenigstens einem zugänglichen Teil (11, 16) der Zuleitung (10, 10') gehalten wird.

3. Schutzblech (1) nach Anspruch 2, dadurch gekennzeichnet, daß die Zuleitung (10) auf der Innenfläche des Schutzbleches (1) angebracht ist, dadurch, daß die Aussparung (21) auf der Innenfläche des Schutzbleches (21) vorgesehen ist und dadurch, daß das zweite Verbindungselement (41) am Boden der Aussparung (21) einen permanenten elektrischen Kontakt mit wenigstens einem zugänglichen Teil (11, 16) der Zuleitung (10) aufrecht erhält.

4. Schutzblech (1') nach Anspruch 2, dadurch gekennzeichnet, daß die Zuleitung (10') auf der Außenfläche des Schutzbleches (1') angebracht ist, dadurch, daß die Aussparung (21') auf der Außenfläche des Schutzbleches (1') vorgesehen ist und dadurch, daß das erste Verbindungselement (40') am Boden der Aussparung (21') einen permanenten elektrischen Kontakt mit wenigstens einem zugänglichen Teil der Zuleitung (10') aufrecht erhält.

5. Schutzblech (70) nach Anspruch 1, wobei die mechanischen und elektrischen Verbindungseinrichtungen ein erstes elektrisch leitendes Verbindungselement (75), das sich von Schutzblech (70) nach außen erstreckt, und ein zweites elektrisch leitendes Verbindungselement (76), das gegen die Innenfläche des Schutzbleches (70) gepreßt und mechanisch mit dem ersten Verbindungselement (75) durch ein in dem Schutzblech (70) vorgesehenes Loch (77) hinweg verbunden ist, aufweisen, dadurch gekennzeichnet, daß dieses Loch (70) so angeordnet ist, daß die Zuleitung (71) unterbrochen ist, die demnach zwei leitende Enden (78, 78') aufweist, die mit der Innenwand des Loches (77) bündig sind, und dadurch, daß das erste Verbindungselement (75) und das zweite Verbindungselement (76) zusammenwirken, um die Zuleitung (71) so zusammenzudrücken, daß die Enden der Leitung (78, 78') mit dem Ende des ersten oder zweiten Verbindungselementes (75, 76), die das Loch (77) jeweils gegenüber der Zuleitung (71) ausfüllen, einen permanenten Kontakt eingehen.

6. Schutzblech (1, 1') nach einem der Ansprüche 2 bis 5, dadurch gekennzeichnet, daß das erste Verbindungselement einen männlichen Teil (40, 40') eines Druckknopfes aufweist.

7. Schutzblech nach Anspruch 6, dadurch gekennzeichnet, daß das erste Verbindungselement außerdem einen zylindrischen, in das Loch eingeführten Gewindeteil aufweist, und dadurch, daß das zweite Verbindungselement eine Mutter und eine Blockierschraube aufweist.

8. Schutzblech (1, 1') nach Anspruch 6, dadurch gekennzeichnet, daß das zweite Verbindungselement einen Niet (41, 41') aufweist, der zum mechanischen Crimpen mit dem ersten Verbindungselement (40, 40') durch das Verbindungsloch (20, 20') hindurch vorgesehen ist.

9. Schutzblech (80) nach Anspruch 1, wobei die mechanischen und elektrischen Verbindungseinrichtungen für jedes Loch nur ein leitendes Verbindungselement (81) aufweisen, das einen oberen Teil (92), der gegen die Außenfläche des Schutzbleches (80) gepreßt ist, und einen unteren Teil mit Crimpklammern (88, 89) aufweist, dadurch gekennzeichnet, daß jedes Loch (87) nahe an der Zuleitung (90) vorgesehen ist und auf der Innenfläche des Schutzbleches (1, 1') mit einer Aussparung (85) von bestimmter Form und Tiefe versehen ist, um die Zuleitung (90) zugänglich zu machen und um die Klammern (88, 89) nach dem Crimpen so aufzunehmen, daß die Zuleitung (90) sich mit wenigstens der einen (89) der Crimpklammern in permanentem elektrischem Kontakt befindet.

10. Schutzblech (1C) nach einem der vorgenannten Ansprüche, das wenigstens einen koextrudierte Metallkern (2) enthält, dadurch gekennzeichnet, daß es eine diesem Metallkern (2) beigefügte Zuleitung (10) aufweist, um einen ersten Pol (+) eines Spannungsgenerators mit einem Pol von wenigstens einer Beleuchtungsvorrichtung (63) zu verbinden, deren anderer Pol über leitende Befestigungselemente (15) mit dem zweiten Pol (-) des Spannungsgenerators verbunden ist.

11. Schutzblech (1A) nach einem der Ansprüche 1 bis 9, das wenigstens einen ersten und einen Zweiten koextrudierten Metallkern (2, 3) aufweist, dadurch gekennzeichnet, daß es Wenigstens eine erste und eine zweite Zuleitung (12, 13) aufweist, die jeweils dem ersten bzw. dem zweiten Metallkern (2, 3) beigefügt sind, um jeweils einen ersten bzw. einen zweiten Pol (+, -) eines Spannungsgenerators mit dem ersten bzw. dem zweiten Pol von wenigstens einer Beleuchtungsvorrichtung (60) zu verbinden.

12. Schutzblech (1B) nach einem der Ansprüche 1 bis 9, das wenigstens einen ersten, einen zweiten und einen dritten koextrudierten Metallkern (2, 3, 4) aufweist, dadurch gekennzeichnet, daß es wenigstens eine erste, eine zweite und eine dritte Zuleitung (12, 13, 14) aufweist, die jeweils dem ersten, zweiten bzw. dem dritten Metallkern (2, 3, 4) beigefügt sind, wobei zwei (12, 14) der Zuleitungen zur Verbindung eines ersten Pols (+) eines Spannungsgenerators mit einem ersten Pol von wenigstens einer Beleuchtungsvorrichtung (61) vorgesehen sind und die dritte Leitung (13) zur Verbindung des zweiten Pols des Spannungsgenerators mit dem zweiten Pol der Beleuchtungsvorrichtung (61) vorgesehen ist.

13. Schutzblech (1'') nach einem der vorhergehenden Ansprüche, dadurch gekennzeichnet, daß die Zuleitung (10'') eine nichtisolierte Drahtlitze ist.

14. Schutzblech (70) nach einem der vorhergehenden Ansprüche, dadurch gekennzeichnet, daß die Zuleitung (71) ein Draht ist.

15. Schutzblech (70) nach Anspruch 15, dadurch gekennzeichnet, daß dieser Draht (71) einen rechteckigen Querschnitt aufweist.

16. Verfahren zur Herstellung eines Schutzbleches (1, 1', 1'') nach einem der Ansprüche 2 bis 4, das folgendes umfaßt: einen Schritt der Koextrusion wenigstens eines Metallkerns (2, 3, 4) mit einem Kunststoffüberzug (5) nach einer zuvor festgelegten Formgebung, und wenigstens einen Schritt des Einsetzens der Einrichtungen (40, 40', 41, 41') zum mechanischen und elektrischen Verbinden von wenigstens einer Beleuchtungsvorrichtung (60-63) mit diesem Schutzblech (1, 1', 1''), wobei dieser Einsetzschritt folgendes umfaßt: wenigstens einen Schritt des Bohrens eines Loches (20, 20', 30) in dieses Schutzblech (1, 1', 1''), einen Schritt der Anordnung in diesem Loch der mechanischen und elektrischen Verbindungseinrichtungen, die ein erstes Verbindungselement (40, 40'), das sich auf der Außenfläche des Schutzbleches (1, 1') erstreckt, und ein zweites Verbindungselement (41, 41'), das auf der Innenfläche des Schutzbleches (1, 1') liegt, aufweisen, dadurch gekennzeichnet, daß der Koextrusionsschritt außerdem eine Koextrusion von wenigstens einer Zuleitung (10, 10', 10'') mit dem Metallkern (2, 3) und dem Kunststoffüberzug umfaßt, derart, daß sich diese Zuleitung nahe an einer der Flächen des Schutzbleches in dem Kunststoffüberzug eingebettet befindet, dadurch, daß jedes Loch (20, 20', 30) so gebohrt ist, daß es die koextrudierte Zuleitung (10, 10', 10'') unterbricht, und dadurch, daß der Einsetzschritt außerdem für jedes Loch folgendes umfaßt:
- einen Schritt zur Herstellung einer Aussparung dieses Lochs auf der Fläche, wobei die Tiefe und der Durchmesser dieser Aussparung so bemessen sind, daß wenigstens ein Teil dieser Zuleitung vom Boden der Aussparung aus zugänglich wird; und
- einen Schritt zur Herstellung eines elektrischen permanenten Kontakts zwischen diesem zugänglichen Teil und dem Stück der mechanischen und elektrischen Verbindungseinrichtungen, das mit der Fläche übereinstimmt, die die Aussparung aufweist.

17. Verfahren zur Herstellung eines Schutzbleches (70) nach Anspruch 5, das folgendes umfaßt: einen Schritt der Koextrusion wenigstens eines Metallkerns (72) mit einem Kunststoffüberzug (73, 74) nach einer zuvor festgelegten Formgebung und wenigstens einen Schritt des Einsetzens von Einrichtungen (75, 76), um mit diesem Schutzblech (70) wenigstens eine Beleuchtungsvorrichtung mechanisch und elektrisch zu verbinden, wobei der Einsetzschritt folgendes umfaßt: wenigstens einen Schritt des Bohrens eines Loches (77) in diesem Schutzblech (70), einen Schritt des Anbringens in diesem Loch (77) der mechanischen und elektrischen Verbindungseinrichtungen, die ein erstes Verbindungselement (75), das sich auf der Außenfläche des Schutzbleches (70) erstreckt, und ein zweites Verbindungselement (76), das auf der Innenfläche des Schutzbleches (70) liegt, aufweisen, dadurch gekennzeichnet, daß der Koextrusionsschritt außerdem eine Koextrusion wenigstens einer Zuleitung (71) mit dem Metallkern (72) und dem Kunststoffüberzug umfaßt, derart, daß sich diese Zuleitung nahe an einer der Flächen des Schutzbleches (70) in dem Kunststoffüberzug eingebettet befindet, dadurch, daß jedes Loch (77) so gebohrt ist, daß es die koextrudierte Zuleitung (71) unterbricht, und dadurch, daß der Einsetzschritt außerdem für jedes Loch (77) folgendes umfaßt:
Zusammendrücken durch das eine (76) der Verbindungselemente (75, 76) von Enden (78, 78') der Zuleitung (71), die mit dem Loch (77) bündig sind, derart, daß diese Leitungsenden (78, 78') mit dem Ende der ersten oder zweiten Verbindungselemente (75, 76), die das Loch (77) jeweils gegenüber der Leitungsenden (78, 78') ausfüllen, einen permanenten Kontakt eingehen.

18. Verfahren zur Herstellung eines Schutzbleches (80) nach Anspruch 9, das folgendes umfaßt: einen Schritt der Koextrusion wenigstens eines Metallkerns (91) mit einem Kunststoffüberzug (83-84) nach einer zuvor festgelegten Formgebung, und wenigstens einen Schritt des Einsetzens eines einzigen Elementes (81) zum mechanischen und elektrischen Verbinden von wenigstens einer Beleuchtungsvorrichtung mit diesem Schutzblech (80), wobei dieser Einsetzschritt folgendes umfaßt: wenigstens einen Schritt des Bohrens eines Loches (87) in dieses Schutzblech (80), einen Schritt der Anordnung in diesem Loch (87) des mechanischen und elektrischen Verbindungselementes (81), das einen oberen, gegen die Außenfläche des Schutzbleches (80) gepreßten Teil und auf dessen Innenfläche Crimpklammern (88, 89) aufweist, dadurch gekennzeichnet, daß der Koextrusionsschritt außerdem eine Koextrusion von wenigstens einer Zuleitung (90) mit dem Metallkern (91) und dem Kunststoffüberzug (83, 84) umfaßt, derart, daß sich diese Zuleitung (90) nahe an einer der Flächen des Schutzbleches (80) in dem Kunststoffüberzug eingebettet befindet, dadurch, daß jedes Loch (87) nahe an der koextrudierten Zuleitung (90) gebohrt ist und dadurch daß, der Einsetzschritt außerdem für jedes Loch folgendes umfaßt:
- einen Schritt zur Herstellung einer Aussparung (85) dieses Lochs (87) auf der Innenfläche des Schutzbleches (80), wobei die Tiefe und der Durchmesser dieser Aussparung so bemessen sind, daß die Zuleitung (90) vom Boden der Aussparung aus zugänglich wird; und
- einen Schritt zur Herstellung eines elektrischen permanenten Kontakts zwischen der Zuleitung (90) und dem Verbindungselement (81) durch Crimpen der Klammern (88, 89) des einzigen Verbindungselementes (81) in der Aussparung (85).
